# EUROPÄISCHE PATENTANMELDUNG

(11) **EP 2 283 739 A1**
(43) Veröffentlichungstag der Anmeldung: **16.02.2011**
(21) Anmeldenummer: 09075368.2
(22) Anmeldetag: 13.08.2009
(51) Int. Cl.: A42B 3/04, A42B 3/06

(54) **Helm mit Solarbeschichtung und Fahrrad mit einem solchen Helm**

(71) Anmelder: F.W. Grundt Logistik + Spedition GmbH & Co. KG, 13509 Berlin (DE)
(72) Erfinder: Schröter, Johannes, 13595 Berlin (DE)
(74) Vertreter: Pfenning, Meinig & Partner GbR

(57) **Zusammenfassung**

Die Erfindung betrifft einen Helm (1) mit einer Solarbeschichtung (2), wobei der Helm (1) eine Anschlussvorrichtung (3) aufweist, welche mit der Solarbeschichtung (2) elektrisch leitend verbunden ist zum Aufladen externer Energiespeicher. Die Erfindung betrifft ferner ein Fahrrad (11) mit einem erfindungsgemäßen Helm (1), wobei das Fahrrad (11) mit mindestens einem Akkumulator (12) ausgestattet ist, wobei der Akkumulator (12) eine Verbindungsvorrichtung (13) aufweist, mit der der Helm (1) über ein Kabel (4) zum Aufladen des Akkumulators (12) verbunden ist.

## Beschreibung

Die Erfindung betrifft einen Helm, insbesondere einen Fahrradhelm, mit einer Solarbeschichtung sowie ein Fahrrad mit einem solchen Helm mit den Merkmalen der Oberbegriffe der unabhängigen Ansprüche.

Elektrofahrräder, also Fahrräder mit einem Elektromotor für einen Antrieb des Fahrrads, weisen in der Regel einen Akkumulator als Energiespeicher auf. Die Speicherkapazität des Akkumulators und der Energieverbrauch des Elektromotors sind maßgebend für eine erzielbare Reichweite des Fahrrads. Für eine möglichst weite Reichweite sind also Akkumulatoren mit einer möglichst großen Speicherkapazität von Vorteil.

Solche Akkumulatoren haben allerdings den Nachteil, dass sie in der Regel relativ teuer und schwer sind. Ebenso sind Ladegeräte zum Aufladen eines Akkumulators häufig schwer und eignen sich daher kaum zur Mitnahme während einer Fahrt mit einem solchen Elektrofahrzeug. Außerdem ist es häufig schwierig, unterwegs einen entsprechenden Anschluss zu einem Stromversorgungsnetz zu finden.

Aus der Druckschrift WO 2005/099917 A1 ist ein Fahrrad mit einem elektrischen Hilfsmotor und einem Akkumulator bekannt, welcher über eine Solarzelleneinheit aufgeladen wird, wobei die Solarzelleneinheit an einem Gepäckträger des Fahrrads befestigt ist. Ein solches Fahrrad hat damit die Eignung, auch während einer Fahrt den Akkumulator kontinuierlich mit Energie zu versorgen. Allerdings ist die Mitnahme von Gepäck auf dem Gepäckträger durch die dort befestigte Solarzelleneinheit eingeschränkt. Außerdem kann die Solarzelle leicht in einem Schatten des Fahrers liegen, wodurch eine Ladeleistung der Solarzelleneinheit reduziert ist.

Es ist somit die Aufgabe der vorliegenden Erfindung, eine Vorrichtung vorzuschlagen, welche die genannten Nachteile beseitigt oder zumindest vermindert. Die Vorrichtung soll also dazu geeignet sein, ein mobiles Gerät, insbesondere ein Elektrofahrrad, mit elektrischer Energie zu versorgen, ohne dabei ein hohes Gewicht aufzuweisen und abhängig von externen Energiequellen zu sein.

Diese Aufgabe wird erfindungsgemäß gelöst durch einen Helm und ein Elektrofahrrad mit einem solchen Helm mit den Merkmalen der unabhängigen Ansprüche. Vorteilhafte Ausführungsformen sowie Weiterentwicklungen ergeben sich mit den Unteransprüchen.

Dabei sollen hier und im Folgenden unter dem Begriff Fahrrad bzw. Elektrofahrrad alle elektrische Energie verbrauchende Fahrzeuge gemeint sein, also außer Fahrrädern und Elektrofahrrädern insbesondere auch elektrische Energie verbrauchende Fahrzeuge mit drei oder vier Rädern, sowie Elektroroller (Segway).

Die Aufgabe wird erfindungsgemäß gelöst durch einen Helm mit einer Solarbeschichtung, wobei der Helm eine Anschlussvorrichtung beinhaltet, welche mit der Solarbeschichtung elektrisch leitend verbunden ist, zum Aufladen externer Energiespeicher oder Betreiben externer elektrischer Geräte. Dabei ist die Solarbeschichtung, welche Solarzellen aufweist, möglichst großflächig auf einer Oberfläche des Helms aufgebracht. Die Anschlussvorrichtung kann vorteilhafterweise als eine Steckvorrichtung zum Einstecken von Verbindungssteckern ausgestaltet sein. Ein solcher Helm mit einer Solarbeschichtung hat gegenüber der oben beschriebenen am Elektrofahrrad angeordneten Solarzellen, dass die Solarzellen auf dem Helm nicht durch einen Schatten des Fahrers oder eines anderen Teile des Fahrrads verdeckt werden können. Außerdem werden durch diesen Helm keine Ladeflächen wie Gepäckträger durch Solarzellen versperrt. Zudem lässt sich ein solcher Helm vielseitig einsetzen, indem sich außer einem Elektrofahrrad ohne weiteres noch andere Geräte anschließen lassen.

In einer vorteilhaften Weiterentwicklung ist der Helm als Fahrradhelm ausgestaltet und weist als solcher ideale Schutzeigenschaften für den Fahrer auf. Er ist vorteilhafterweise in einem leichten Kunststoffmaterial gefertigt. Alternativ kann der Helm auch als ein Aufsatz für einen gewöhnlichen Fahrradhelm ausgestaltet sein, der auf einer Oberseite des gewöhnlichen über eine Befestigungsvorrichtung fixierbar ist.

In einer vorteilhaften Weiterentwicklung der Erfindung ist der Helm mit einem elektrisch leitenden Kabel ausgestattet, welches mit einem Ende mit der Anschlussvorrichtung des Helms zum Anschließen externer Geräte über ein zweites Ende des Kabels verbunden ist. Dabei können die beiden Enden des Kabels als Stecker bzw. als Steckvorrichtungen ausgeformt sein. Diese Weiterentwicklung des Helms hat somit die Eignung, mobile Geräte, die der Träger des Helms mit sich führt, unterwegs mit Energie zu versorgen, beispielsweise um sie zu betreiben oder aufzuladen. Diese Geräte kann der Anwender bequem in einer Tasche mit sich führen, ohne dass diese Geräte direkt am Helm befestigt sein müssen. Als solche Geräte kommen beispielsweise Digitalkameras, Mobilfunktelefone, MP3-Player, Ortungsgeräte oder beliebige andere elektrische Geräte in Frage. Insbesondere eignet sich ein solcher Helm zum Aufladen eines Elektrofahrrads während der Fahrt. Als Anwender kommen insbesondere Wanderer, Bergsteiger, Kletterer, Skifahrer, Fahrradfahrer, Reiter, Segler und Surfer in Betracht, also Personen die sich im Freien aufhalten und dabei einen Helm als Kopfschutz benötigen.

Eine vorteilhafte Ausführungsform des Helms sieht vor, dass der Helm mindestens eine Ausbuchtung, einen Rand und/oder eine Krempe mit Solarbeschichtung aufweist. Ein auf diese Weise ausgeformter Helm besitzt eine vergrößerte Oberfläche zum Auftragen von Solarzellen für eine besonders große Ladeleistung des Helms.

In einer vorteilhaften Ausführungsform weist der Helm einen austauschbaren Einsatz zur Anpassung des Helms an eine Kopfform und/oder eine Kopfgröße des Trägers auf. Damit hat der Helm die Eignung, von mehreren Anwendern abwechselnd benutzt zu werden, wobei vorteilhafterweise jeder der Träger einen eigenen für seinen Kopf passend ausgeformten Einsatz besitzt. Alternativ kann der Helm auch mit einem aufblasbaren Einsatz (Luftkissen) versehen sein, welcher durch Ein- oder Auslassen von Luft an die Kopfform und/oder die Kopfgröße des Trägers angepasst werden kann.

In einer besonderen Ausführungsform beinhaltet der Helm mindestens eine Akkumulatoreinheit und mindestens eine mit der Akkumulatoreinheit verbundene Lichtquelle (oder ein anderes mit der Akkumulatoreinheit verbundenes elektrisches Gerät), wobei die Akkumulatoreinheit zum Aufladen mit der Solarbeschichtung verbunden ist. Diese Ausführungsform hat den Vorteil, dass der Helm mit einer Lichtquelle beleuchtbar ist und somit beispielsweise im Straßenverkehr für andere Verkehrsteilnehmer gut sichtbar ist. Außerdem eignen sich solche Lichtquellen auch zur Ausleuchtung eines Sichtfeldes des Trägers des Helmes.

Die Erfindung sieht außerdem ein Fahrrad mit einem Helm hier vorgeschlagener Art vor, wobei das Fahrrad mit mindestens einem Akkumulator ausgestattet ist, wobei der Akkumulator eine Verbindungsvorrichtung aufweist, mit der der Helm über ein Kabel zum Aufladen des Akkumulators verbunden ist. Ein solches Fahrrad hat den Vorteil, dass der Akkumulator auch während einer Fahrt kontinuierlich mit Energie versorgt werden kann. Außerdem werden durch die am Helm angeordneten Solarzellen keine Ladeflächen des Fahrrads versperrt. Selbstverständlich kann das Fahrrad auch zusätzlich zu den am Helm befindlichen Solarzellen weitere Solarzellen aufweisen, beispielsweise am Gepäckträger oder am Rahmen des Fahrrads. Des weiteren könnte ein solches Fahrrad versicherungstechnische Vorteile mit sich bringen, falls eine Versicherung für ein solches mit einem Helm ausgestattetes Fahrrad einen begünstigten Versicherungstarif, insbesondere für eine Unfallversicherung, anbietet.

In einer Weiterentwicklung ist das Fahrrad mit einem Elektromotor zum Antrieb des Fahrrads ausgestattet, welcher an den Akkumulator angeschlossen ist. Ein solches Fahrrad zeichnet sich durch eine besonders große Reichweite aus, da der Akkumulator während der Fahrt über den Helm kontinuierlich aufgeladen werden kann.

In einer Weiterentwicklung weist das Fahrrad eine Haltevorrichtung auf, an der der Helm befestigt werden kann. Dabei kann diese Haltevorrichtung vorteilhafterweise robust ausgestaltet sein und zusätzlich ein Schloss für eine diebstahlsichere Befestigung des Helms aufweisen. Ein solches Fahrrad könnte versicherungstechnische Vorteile mit sich bringen, falls eine Versicherung für ein solches mit einem anschließbaren Helm ausgestattetes Fahrrad einen begünstigten Versicherungstarif, insbesondere für eine Unfallversicherung oder Diebstahlversicherung, anbietet.

In einer Weiterentwicklung ist der Helm durch die Haltevorrichtung über einem Sattel des Fahrrads fixierbar, so dass ein Witterungsschutz des Sattels, insbesondere gegen Regen und UV-Strahlung, erzielbar ist. Vorteilhafterweise ist das Fahrrad auf diese Weise auch in einem abgestellten Zustand aufladbar. In einer Weiterentwicklung des Fahrrads ist das Fahrrad mit einem Alarmsystem ausgestattet, wobei das Alarmsystem eingerichtet ist zur Erzeugung eines Alarmsignals, falls eine Verbindung zwischen Fahrrad und Helm getrennt ist. Dabei kann diese Verbindung aus der oben beschriebenen Haltevorrichtung und/oder dem Kabel bestehen. Das Alarmsignal kann akustisch, optisch oder auch als Funksignal ausgestaltet sein. Ein Alarmsignal in Form eines Funksignals hat den Vorteil, dass ein mit einem entsprechenden Sender ausgestatteter Helm bzw. ein mit einem solchen Sender ausgestattetes Fahrrad besonders leicht zu orten ist. Daher weist in einer vorteilhaften Weiterentwicklung das Alarmsystem einen entsprechenden Sender am Fahrrad und am Helm auf. Ein entsprechend eingerichtetes Ortungssystem hat darüber hinaus auch Vorteile im Fall eines Leihfahrrads in einem kommerziellen Fahrradverleih.

In einer Weiterentwicklung des Fahrrads sind das Kabel, die Anschlussvorrichtung und die Verbindungsvorrichtung als Diebstahlschutz mechanisch robust ausgestaltet. Auf diese Weise wird parallel zur Energieversorgung des Fahrrads ein Diebstahlrisiko des Helms verringert.

In einer Weiterentwicklung des Fahrrads sind Oberflächen des Fahrrads mit einer Solarbeschichtung zum Aufladen des Akkumulators ausgestattet, insbesondere Oberflächen des Fahrradrahmens, eines oder mehrerer Schutzbleche, Gepäckträger und Laderäume. Durch solche zusätzlichen Solarbeschichtungen lässt sich eine Ladeleistung des Akkumulators für eine Vergrößerung der Reichweite des Elektrofahrrads weiter steigern.

In einer Weiterentwicklung des Fahrrads sind das Fahrrad und der Helm jeweils mit einer Sende- und einer Empfangseinheit zur Übertragung von Informationen zwischen Fahrrad und Helm ausgestattet. Auf diese Weise lässt sich insbesondere ein oben beschriebenes Alarmsystem realisieren. Außerdem kann so auch ein Bremssignal des Fahrrads zum Ansteuern einer als Bremslicht ausgestalteten Lichtquelle des Helms an den Helm übermittelt werden. Ein solcher Datenaustausch zwischen Fahrrad und Helm kann beispielsweise über Funk, Infrarot oder auch kabelgebunden über das Kabel stattfinden.

Im Folgenden werden einige Ausführungsbeispiele der Erfindung anhand von Figuren 1 bis 4 beschrieben. Dabei zeigt
- Fig. 1: eine schematische Darstellung eines Helms hier vorgestellter Art in einer Seiten- ansicht,
- Fig. 2: einen Helm hier vorgestellter Art in einer schematischen Darstellung in einer Ansicht von oben,
- Fig. 3: eine schematische Abbildung eines Fahrrads hier vorgestellter Art und
- Fig. 4: einen Helm mit einer Befestigungsvorrich- tung an einem Fahrradsattel.

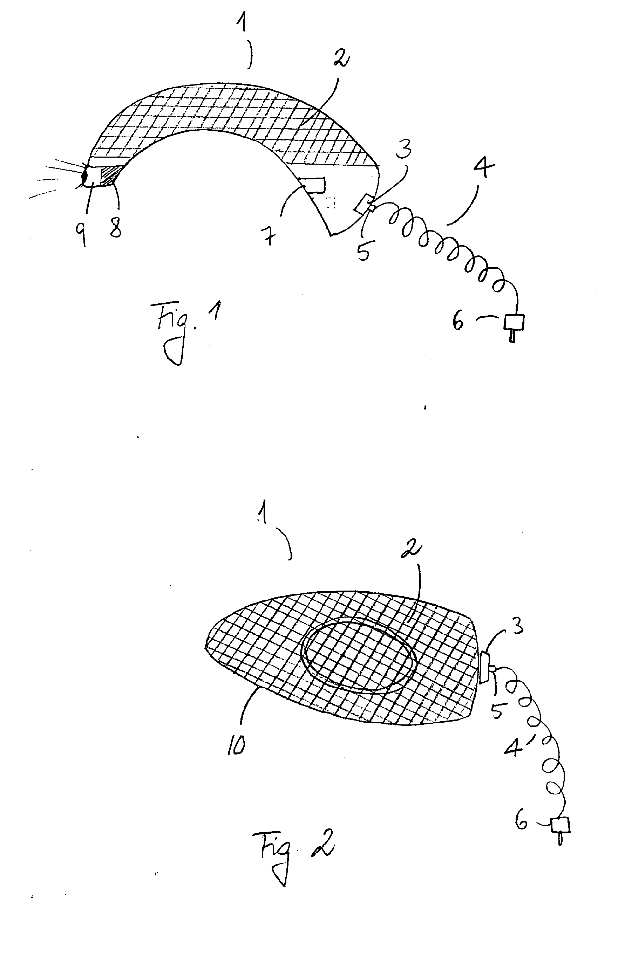

Fig. 1 zeigt einen Helm 1 hier vorgeschlagener Art mit einer Solarbeschichtung 2, wobei die Solarbeschichtung an einer Oberseite des Helms für eine möglichst große elektrische Leistung möglichst großflächig aufgetragen ist. Der Helm weist eine Anschlussvorrichtung 3 zum Aufladen externer Energiespeicher oder zum Betreiben externer elektrischer Geräte auf, welche mit der Solarbeschichtung elektrisch leitend verbunden ist. Der Helm umfasst ferner ein elektrisch leitendes Kabel 4, welches mit einem Ende 5 mit der Anschlussvorrichtung 3 des Helms 1 verbunden ist, zum Anschließen externer Geräte (hier nicht dargestellt) über ein zweites Ende 6 des Kabels 4. Das Kabel 4 ist zur Herstellung einer elastischen Eigenschaft in einer Spiralform ausgestaltet. Das Kabel sowie die Anschlussvorrichtung sind für einen Diebstahlschutz des Helms und angeschlossener Geräte robust ausgestaltet. Der Helm weist einen austauschbaren Einsatz (hier nicht dargestellt) zur Anpassung des Helms an eine Kopfform oder Kopfgröße eines Trägers des Helms auf. Der Helm kann auch ausgestaltet sein als Aufsatz für einen darunter liegenden Helm, insbesondere eines gewöhnlichen Fahrradhelms, welcher direkt auf dem Kopf des Trägers sitzt.

Der Helm ist mit einer Sende- und Empfangseinheit 7 zum Senden und Empfangen von Funksignalen ausgestattet. Des Weiteren ist die Empfangseinheit zum Senden und Empfangen von Infrarotsignalen eingerichtet. Die Sende- und Empfangseinheit ist eingerichtet für einen Datenaustausch mit einem entsprechend eingerichteten Sende- und Empfangssystem an einem Fahrrad, insbesondere zum Empfang von Bremssignalen vom Fahrrad. Ferner ist die Sende- und Empfangseinheit am Helm ausgestaltet ein optisches, akustisches und eine als Funksignal ausgestaltetes Signal auszusenden, falls das Kabel 4 oder die Anschlussvorrichtung beschädigt wird.

Der Helm weist ferner eine Akkumulatoreinheit 8 und eine mit der Akkumulatoreinheit 8 verbundene Lichtquelle 9 auf, wobei die Akkumulatoreinheit mit der Solarbeschichtung verbunden ist. Die Lichtquelle 9 ist mit der Empfangseinheit 7 verbunden. Die Sende-und Empfangseinheit 7 ist eingerichtet zum Empfangen von Bremssignalen von einem Fahrrad und zum Senden von Steuersignalen an die Lichtquelle 9 zum Ein- und Ausschalten der Lichtquelle 9 gemäß der Bremssignale.

In Fig. 2 ist ein Helm 1 hier vorgeschlagener Art dargestellt, wobei der Helm eine Solarbeschichtung 2 und eine Anschlussvorrichtung 3 aufweist. Der Helm ist außerdem für eine Vergrößerung einer Oberfläche des Helms mit einer breiten Krempe 10 ausgestaltet. Die Solarzellen 2 sind über die gesamte Oberfläche des Helms verteilt, um auf diese Weise eine möglichst große elektrische Leistung zu erzielen. Der Helm umfasst ferner eine Anschlussvorrichtung 3 mit einem Kabel 4, welches über Magnetverbindung mit der Anschlussvorrichtung verbunden ist.

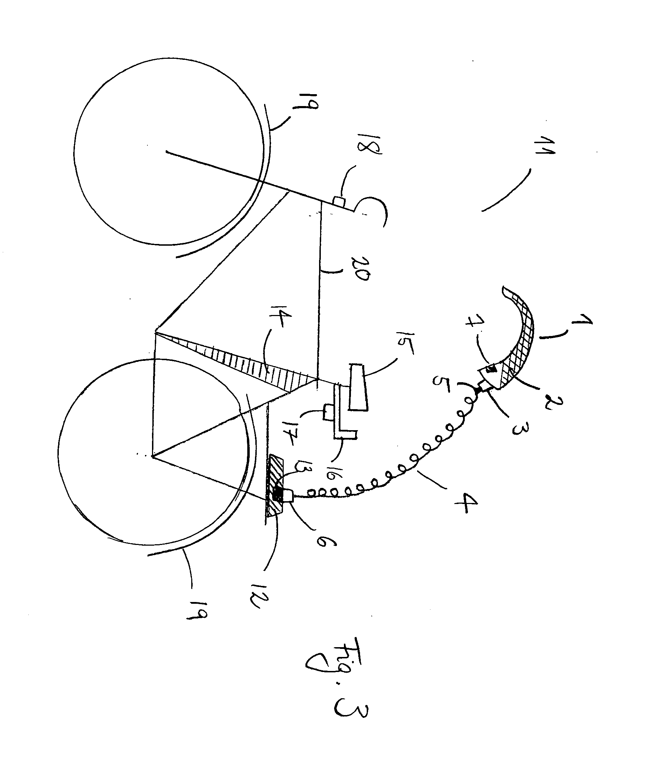

In Fig. 3 ist ein Elektrofahrrad 11 mit einem Helm hier vorgeschlagener Art dargestellt. Das Elektrofahrrad 11 weist einen Akkumulator 12 mit einer Verbindungsvorrichtung 13 auf, mit der der Helm 1 über ein Kabel 4 zum Aufladen des Akkumulators 12 verbunden ist. Zu diesem Zweck umfasst der Helm eine Solarbeschichtung 2 sowie eine Anschlussvorrichtung 3, an die das Kabel 4 mit einer abschließbaren Steckvorrichtung angeschlossen ist. Das Kabel, die Anschlussvorrichtung, die abschließbare Steckvorrichtung und die Verbindungsvorrichtung, welche ebenfalls abschließbar ausgestattet sein kann, sind mechanisch robust ausgestaltet für eine effektive Diebstahlsicherung. Alternativ kann auch die Anschlussvorrichtung 3 und/oder die Verbindungsvorrichtung 13 so ausgestaltet sein, dass sie sich bei einer Zugbelastung ab einer bestimmten Stärke leicht auflösen. Eine solche auflösbare Verbindung lässt sich insbesondere mithilfe von Magneten an der Verbindungs- und/oder Anschlussvorrichtung oder an den Steckern 5, 6 des Kabels 4 erreichen.

Das Fahrrad weist ferner einen Elektromotor 14 auf, der an den Akkumulator 12 angeschlossen ist. Das Fahrrad weist an einem Sattel 15 eine Haltervorrichtung 16 auf, an der der Helm 2 bei Nichtbenutzung des Fahrrads 11 fixiert werden kann. Dabei ist diese Haltevorrichtung 16 für einen erhöhten Diebstahlschutz wiederum mechanisch massiv und mit einem Schloss ausgestaltet. Des Weiteren weist das Fahrrad eine Alarmvorrichtung 17 auf, welche eingerichtet ist, ein akustisches, ein optisches sowie ein Funksignal auszusenden, falls die Haltevorrichtung 16 beschädigt wird oder die Verbindung zwischen dem Helm 1 und dem Akkumulator 12 beschädigt wird. Zu diesem Zweck ist auch der Fahrradhelm 1 mit einer Empfangs-und Sendevorrichtung 7 ausgestaltet, welche ebenfalls ein optisches, ein akustisches und ein Funksignal zur Ortung des Helms im Falle eines Diebstahls aussendet. Ferner beinhaltet das Fahrrad 11 ein Sende- und Empfangssystem 18 welches über Funk mit der Sende-und Empfangseinheit 7 des Helms in einer Verbindung für einen Datenaustausch mit dem Helm steht. Insbesondere ist das Sende- und Empfangssystem 18 eingerichtet, ein Bremssignal an den Helm zu senden.

Ferner sind an dem Fahrrad Solarzellen auf Schutzblechen 19 sowie an einem Rahmen befestigt um eine Ladeleistung des Akkumulators 12 zu erhöhen.

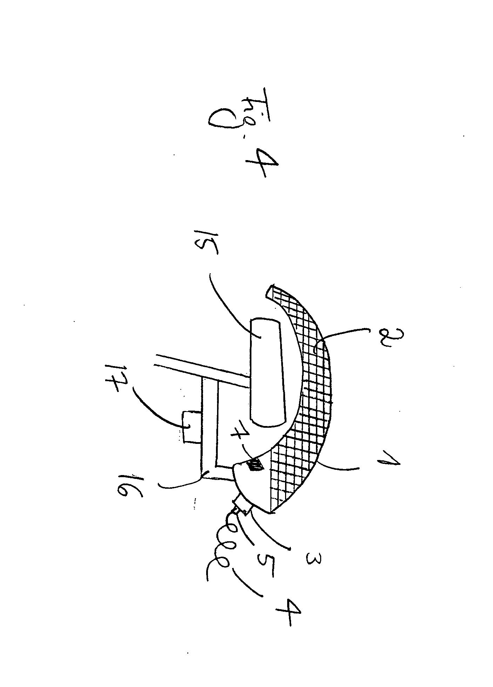

In Fig. 4 ist der Sattel 13 des oben beschriebenen Fahrrads dargestellt. Der Sattel weist eine Haltevorrichtung 16 auf, an der der Helm 1 zur Diebstahlsicherung befestigt ist. Ein weiterer Vorteil der Haltevorrichtung 14 ist ein Witterungsschutz des Sattels 15, insbesondere vor Nässe und UV-Strahlung. Ausserdem ist der Helm auf dieser Weise auch während des Parkens des Elektrofahrzeugs vorteilhafter so ausgerichtet, dass die Solarbeschichtung 2 nach oben weist und das Fahrrad auch während des Parkens möglichst effektiv aufgeladen wird.

## Patentansprüche

1. Helm (1) mit einer Solarbeschichtung (2),
**dadurch gekennzeichnet, dass**
der Helm (1) eine Anschlussvorrichtung (3) aufweist, welche mit der Solarbeschichtung (2) elektrisch leitend verbunden ist zum Aufladen externer Energiespeicher.

2. Helm (1) nach Anspruch 1, **dadurch gekennzeichnet, dass** der Helm (1) ein elektrisch leitendes Kabel (4) aufweist, welches mit einem ersten Ende (5) mit der Anschlussvorrichtung (3) des Helms verbunden ist zum Anschließen externer Geräte über ein zweites Ende (6) des Kabels.

3. Helm (1) nach einem der vorangehenden Ansprüche, **dadurch gekennzeichnet, dass** der Helm (1) mindestens eine Ausbuchtung, einen Rand und/oder eine Krempe (10) mit Solarbeschichtung (2) aufweist.

4. Helm (1) nach einem der vorangehenden Ansprüche, **dadurch gekennzeichnet, dass** der Helm (1) einen austauschbaren Einsatz aufweist zur Anpassung an eine Kopfform und/oder Kopfgröße.

5. Helm (1) nach einem der vorangehenden Ansprüche, **dadurch gekennzeichnet, dass** der Helm (1) mit einer Sende- und einer Empfangseinheit (7) ausgestattet ist zum Senden und Empfangen von Funksignalen.

6. Helm (1) nach einem der vorangehenden Ansprüche, **dadurch gekennzeichnet, dass** der Helm (1) mindestens eine Akkumulatoreinheit (8) und mindestens eine mit der Akkumulatoreinheit (8) verbundene Lichtquelle (9) aufweist, wobei die Akkumulatoreinheit (8) mit der Solarbeschichtung (2) verbunden ist.

7. Fahrrad (11) mit einem Helm (1) nach einem der vorangehenden Ansprüche, **dadurch gekennzeichnet, dass** das Fahrrad (11) mit mindestens einem Akkumulator (12) ausgestattet ist, wobei der Akkumulator (12) eine Verbindungsvorrichtung (13) aufweist, mit der der Helm (1) über ein Kabel (4) zum Aufladen des Akkumulators (12) verbunden ist.

8. Fahrrad (11) nach Anspruch 6, **dadurch gekennzeichnet, dass** das Fahrrad (11) einen Elektromotor (17) umfasst, der an den Akkumulator (12) angeschlossen ist.

9. Fahrrad (11) nach einem der Ansprüche 6 oder 7, **dadurch gekennzeichnet, dass** das Fahrrad (11) eine Haltevorrichtung (16) aufweist, an die der Helm (1) befestigt werden kann.

10. Fahrrad (11) nach einem der Ansprüche 6 bis 9, **dadurch gekennzeichnet, dass** das Fahrrad (11) ein Alarmsystem (17) umfasst, wobei das Alarmsystem (17) eingerichtet ist zur Erzeugung eines Alarmsignals, falls eine Verbindung zwischen Fahrrad (11) und Helm (1) getrennt ist.

11. Fahrrad (11) nach einem der Ansprüche 6 bis 10, **dadurch gekennzeichnet, dass** die Kabel (4), die Anschlussvorrichtung (3) und die Verbindungsvorrichtung (13) als Diebstahlschutz mechanisch robust ausgestaltet sind.

12. Fahrrad (11) nach einem der Ansprüche 6 bis 11, **dadurch gekennzeichnet, dass** Oberflächen des Fahrrads (11) mit einer Solarbeschichtung ausgestattet sind zum Aufladen des Akkumulators (12), insbesondere Oberflächen eines Fahrradrahmens (20), eines oder mehrerer Schutzbleche (18), Gepäckträger und Laderäume.

13. Fahrrad (11) nach einem der Ansprüche 6 bis 12, **dadurch gekennzeichnet, dass** das Fahrrad (11) und der Helm (1) jeweils mit einer Sende- und einer Empfangseinheit (7, 18) ausgestattet sind zur Übertragung von Informationen zwischen Fahrrad (11) und Helm (1).
